# EUROPEAN PATENT SPECIFICATION

(11) **EP 4 446 493 B1**
(45) Date of publication and mention of the grant of the patent: **15.04.2026**
(21) Application number: 22903168.7
(22) Date of filing: 18.11.2022
(51) Int. Cl.: D06F 39/02, D06F 33/34, D06F 33/37, D06F 39/08, D06F 105/02

(54) **LIQUID INFLOW RELEASE CONTROL METHOD FOR WASHING MACHINE**
VERFAHREN ZUR STEUERUNG DER FLÜSSIGKEITSZUFLUSSFREISETZUNG FÜR WASCHMASCHINE
PROCÉDÉ DE COMMANDE DE LIBÉRATION D'ENTRÉE DE LIQUIDE POUR LAVE-LINGE

(30) Priority: 10.12.2021 CN 202111505328
(43) Date of publication of application: 16.10.2024
(73) Proprietor: HAIER IOC ECOSYSTEM TECHNOLOGIES (SHANGHAI) CO., LTD., Shanghai 201613 (CN); HAIER SMART HOME CO., LTD., Qingdao, Shandong 266101 (CN)
(72) Inventor: XU, Sheng, Qingdao, Shandong 266101 (CN); SUN, Dongsong, Qingdao, Shandong 266101 (CN); LV, Yanfen, Qingdao, Shandong 266101 (CN); ZHANG, Tao, Qingdao, Shandong 266101 (CN); MA, Chuanrong, Qingdao, Shandong 266101 (CN)
(74) Representative: Winter, Brandl - Partnerschaft mbB
(86) International application number: PCT/CN2022/132807
(87) International publication number: WO 2023/103745

(56) References cited:
- EP-A1- 3 789 121
- WO-A1-2014/180022
- CN-A- 103 290 657
- CN-A- 111 962 265
- CN-U- 203 654 014
- CN-U- 216 786 564
- CN-U- 216 786 565
- JP-A- 2014 090 942
- US-A1- 2011 154 864

## Description

### Field

The application relates to a field of laundry treatment apparatus, and in particular relates to a washing machine control method for dispensing liquid in a washing machine.

### Background

With the development of science and technology, there are more and more types of laundry apparatus, and laundry apparatus becomes gradually more and more intellectualized. Automatic dispensing devices in the prior art have greatly facilitated people's lives. A variety of laundry treatment agents need to be separately dispensed by a feeding device with multiple delivery pumps. For a dispensing device, more delivery pumps are needed, the structure is complex, and the cost is high.

Chinese Patent Application No. CN201420198178.7 discloses a washing machine and an automatic dispensing system thereof. The automatic dispensing system includes a laundry treatment agent storage box with a plurality of laundry treatment agent storage chambers; an electromagnetic steering valve; and a delivery pump. The electromagnetic steering valve has a plurality of liquid inlets and one liquid outlet, the laundry treatment agent storage box is communicated with the electromagnetic steering valve, and the liquid inlets are connected with the laundry treatment agent storage chambers in one-to-one correspondent. The electromagnetic steering valve is used to selectively connect one of the liquid inlets with the one liquid outlet. The delivery pump has an inlet and an outlet, and the inlet of the delivery pump is connected with the one liquid outlet. The washing machine is controlled to connect the liquid outlet with one of the liquid inlets and disconnected from the other liquid inlets by the electromagnetic steering valve. Although the switching valve can be adjusted, the electromagnetic valve has low precision and cannot be continuously adjusted.

EP 3 789 121 A1 relates to a chemical dispenser for a chemical dispensing system, including an input selector valve having an opened position and a closed position and configured to be coupled to a diluent source, a diverter valve coupled to the input selector valve, and a plurality of eductors coupled to the diverter valve.

WO 2014/180022 A1 relates to a detergent delivery assembly comprising detergent chambers, a conversion valve comprising one outlet and inlets being communication with detergent chambers, and a delivery pump connected with the outlet of the conversion valve, and the delivery pump pumps the selected detergent to an exhaust port of the delivery pump.

US 2011/154864 A1 relates to a washing machine including a valve.

In view of this, the present application is proposed.

### Summary

The technical problem to be solved by the present invention is how to overcome the deficiencies of the prior art. A control method for dispensing liquid in a washing machine is provided according to the independent claim 1. In dispensing a laundry treatment agent, the valve core of the switching valve is first rotated to a preset neutral position wherein the valve core is not communicated with liquid inlets of the valve body. It is improved in accurately controlling the switching valve. After a laundry treatment agent is dispensed, the switching valve is again controlled to return to the preset neutral position, and then determining to receive a dispensing instruction. So the switching valve is continuously adjusted, and the practicality is increased.

Another aspect of the present application, which does not form part of the claimed invention, is to provide a washing machine. A washing machine can be continuously controlled and be improved in the control accuracy by controlling the state of the switching valve.

In order to solve the above-mentioned technical problems, the basic concept of the technical solution in the present invention is to provide a washing machine control method for dispensing liquid. A switching valve includes a valve core and a valve body, the valve core is provided with one inlet and one outlet, and the valve body is provided with liquid inlets and one liquid outlet. One of the liquid inlets is as a water inlet.

The control method includes:
S1, receiving an instruction for dispensing laundry treatment agent;
S2, controlling the switching valve to be in a preset neutral position where the valve core is not communicated with the liquid inlets of the valve body;
S3, controlling the valve core of the switching valve to rotate to be communicated with a liquid inlet corresponding to a laundry treatment agent for dispensing;
S4, controlling the switching valve to rotate to be in the preset neutral position;
S5, determining whether to dispense a laundry treatment agent again; if yes, executing step S3; if not, controlling the switching valve to feed water for flushing.

In an operation of a washing machine in the present invention, after receiving an instruction for dispensing a laundry treatment agent, the switching valve starts to run from the neutral state. It is avoided that the inlet of the valve core of the switching valve is in inaccurate communication with the liquid inlet of the valve body. After dispensing the corresponding laundry treatment agent, the switching valve is controlled to return to the preset neutral position again, and then determine whether to receive a dispensing instruction. So, the switching valve is continuously controlled, it is improved in accurately controlling the switching valve, and it is increased in user's experience.

According to the present invention, the switching valve includes a stepper motor. The stepper motor is connected with the valve core and is used to drive the valve core to rotate in the valve body. A limiting component is arranged at the preset neutral position, for preventing the valve core from continuing to rotate.

In step S2, the following steps are also included:
S21, controlling the switching valve to rotate toward a preset neutral position;
S22, detecting a current value I of the stepper motor;
S23, determining whether the current value I of the stepper motor is greater than or equal to a preset value I0; if yes, determining that the switching valve is rotated to the preset neutral position, and controlling the switching valve to stop rotating.

According to the present invention, a limiting rib is arranged at the preset neutral position of the valve body. An end of the valve core is provided with a positioning protrusion. The positioning protrusion is configured to be abutted against the limiting rib to limit a rotation range of the valve core.

In step S2, the following steps are also included:
S21, controlling the switching valve to rotate toward a preset neutral position;
S22, detecting a position of the positioning protrusion relative to the limiting rib;
S23, determining whether the positioning protrusion is in contact with the limiting rib; if yes, determining that the switching valve rotates to a preset neutral position, and controlling the switching valve to stop rotating.

Further, in step S3, the following steps are included:
S31, obtaining a rotation direction and calculating an amount of rotation steps according to the preset neutral position and a position of a liquid inlet corresponding to a laundry treatment agent;
S32, controlling the stepper motor to rotate according to the rotation direction obtained and the rotation steps calculated;
S33, dispensing the corresponding laundry treatment agent.

Further, between the step S3 and the step S4, the following steps are also included:
detecting a volume of flow L1 of a laundry treatment agent, and determining whether the volume of flow L1 of the laundry treatment agent is greater than or equal to a preset volume of flow L1; if yes, determining that a process of dispensing the laundry treatment agent is completed, and executing step S4.

As an embodiment, in step S5, the following steps are included:
obtaining whether a laundry treatment agent is dispensed again within a preset time T; if yes, executing step S3; if not, controlling to flush the switching valve with water.

Further, in S5, the preset time T is 1s≤T≤5s.

As an embodiment, the liquid inlets of the valve body include one water inlet, which is used to flush the switching valve with water.

In step S5, if it is determined that the switching valve is controlled to be flushed with water, the following steps are included:
S51, obtaining a rotation direction and calculating a amount of rotation steps according to a preset neutral position and a position of the water inlet;
S52, controlling the stepper motor to run according to the rotation direction obtained and the rotation steps calculated;
S53, controlling to flush the switching valve with water.

The present application also provides a washing machine, which adopts any one of the washing machine control method for dispensing liquid described above.

Through the above technical solution, the present invention has the following advantages compared with the prior art.
(1) In the present invention, when it is determined that a laundry treatment agent is dispensed by detecting a current value of the stepper motor, it is determined whether the switching valve is in the preset neutral position. It is avoided that an inlet of the valve core abnormally communicates with the liquid inlets of the valve body when the switching valve is in dispensing. So various laundry treatment agents can be dispensed, the control accuracy of the switching valve is improved, and the user's experience is increased.
(2) In the present invention, a stepper motor is used for controlling the switching valve to realize the continuous adjustment of the neutral state, the dispensing state and the flushing state of the switching valve during operation. The stepper motor is controlled to run according to the rotation direction and an amount of rotation steps, so the inlet of the valve core is connected with or disconnected from the liquid inlets of the valve body to realize the change of the state of the switching valve. The switching valve can be highly accurately controlled, and the dispensing accuracy and the washing effect are improved.

The invention is defined by the independent claim. Particular embodiments are described in the dependent claims. The specific implementations of the present application are further described in detail below in conjunction with the accompanying drawings.

### Description of drawings

The drawings serve as a part of the present application to further understand the present application, and illustrative embodiments of the present application and the description thereof are used to explain the present application, but do not constitute an undue limitation on the present application. Apparently, the drawings in the following description are merely some embodiments, and those of ordinary skill in the art can obtain other drawings according to these drawings without creative work. In the figures:
Fig. 1 is a flow chart of a method for controlling to dispense liquid into a washing machine according to the present invention;
Fig. 2 is a flow chart of a method for controlling to dispense liquid into a washing machine according to the present invention;
Fig. 3 is a structural diagram of a switching valve of the present invention;
Fig. 4 is a structure diagram of a valve body and a valve core of a switching valve of the present invention;
Fig. 5 is a schematic diagram of a switching valve in a preset neutral position of the present invention;
Fig. 6 is a schematic diagram of a switching valve of the present invention in a dispensing state;
Fig. 7 is a schematic diagram of a switching valve of the present invention in a flushing state.

In the figures: 1, valve body; 11, liquid inlet; 12, water inlet; 13, liquid outlet; 14, limit rib; 2, valve core; 21, positioning protrusion; 22, inlet; 23, outlet; 3, stepper motor.

It should be noted that these drawings and text descriptions are not intended to limit the concept scope of the present application in any way, but illustrate the concept of the present application for those skilled in the art by referring to specific embodiments.

### Detailed Description

In order to make objects, technical solutions and advantages of the embodiments of the present invention clearer, the solutions in the embodiments are clearly and completely described as follows in combination with accompanying drawings in the embodiments of the present application. The following embodiments are used for illustrating the present application, rather than limiting the scope of the present application.

In the description of the present application, it should be noted that, the orientation or positional relationship indicated by such terms as "up", "down", "front", "rear", "left", "right", "vertical", "inner" and "outer" is the orientation or positional relationship based on the accompanying drawings. Such terms are merely used for conveniently and simplified describing the present application, rather than indicating or implying that the device or element referred to must be located in a certain orientation or must be constructed or operated in a certain orientation. Therefore, the terms cannot be understood as a limitation to the present application.

In the description of the present application, it should be noted that, unless otherwise stipulated and defined definitely, such terms as "installed", "connected" and "in connection" should be understood in their broad sense, e.g., the connection can be a fixed connection, a detachable connection or an integral connection; can be mechanical connection or electrical connection; and can be direct connection or can be indirect connection through an intermediate. For those skilled in the art, specific meanings of the above terms in the present application can be understood according to specific conditions.

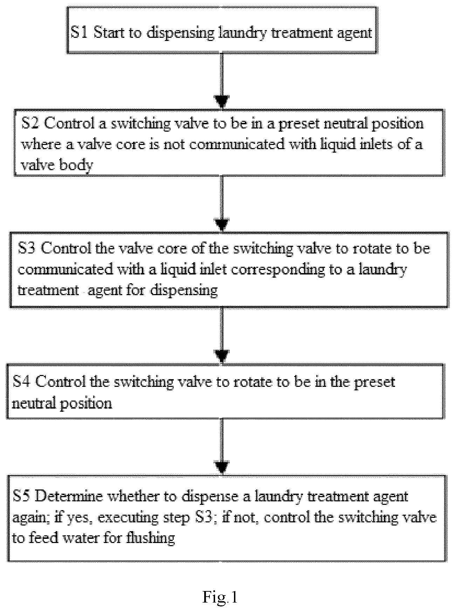

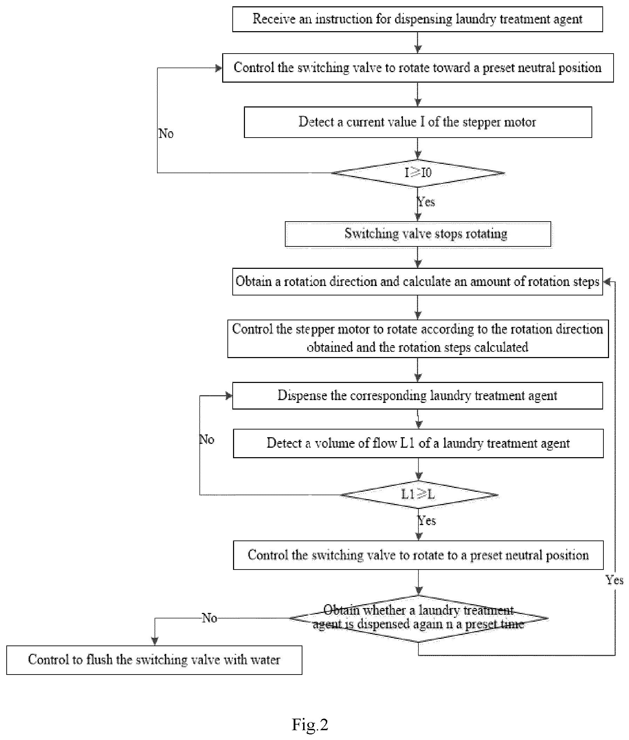

As shown in Fig. 1 to Fig. 7, a washing machine in a washing machine controlling method for dispensing liquid according to the present invention includes a switching valve.

The switching valve includes a valve core 2 and a valve body 1 .

The valve body 1 is provided with liquid inlets 11, and the valve core 2 is rotatably installed in the valve body 1 and can be selectively communicated with one of the liquid inlets 11.

The control method includes:
S1, receiving an instruction for dispensing laundry treatment agent;
S2, controlling the switching valve to be in a preset neutral position where the valve core 2 is not communicated with the liquid inlets 11 of the valve body 1;
S3, controlling the valve core 2 of the switching valve to rotate to be communicated with a liquid inlet corresponding to the laundry treatment agent for dispensing;
S4, controlling the switching valve to rotate to be in the preset neutral position;
S5, determining whether to dispense a laundry treatment agent again; if yes, executing step S3; if not, controlling the switching valve to feed water for flushing.

In an operation of a washing machine in the present invention, after receiving an instruction for dispensing a laundry treatment agent, the switching valve is controlled to be in a preset neutral position, and then a laundry treatment agent is controlled to be dispensed in the instruction, so that it is avoided that an inlet 22 of the valve core 2 communicates abnormally with the liquid inlets 11 of the valve body 1 when the switching valve is in dispensing. After dispensing, the switching valve returns to be in the neutral position again, and then it is determined that whether to dispense a laundry treatment agent again. So an operation of dispensing again a laundry treatment agent or flushing the switching valve is completed, various laundry treatment agents are dispensed and are continuously controlled, and it is improved to control accurately the switching valve and increased in user's experience.

Further, a stepper motor 3 is also included.

The stepper motor 3 is connected with the valve core 2 and is used to drive the valve core 2 to rotate in the valve body 1.

A limiting component is arranged at the preset neutral position, for preventing the valve core 2 from continuing to rotate.

In step S2, the following steps include:
S21, controlling the switching valve to rotate toward a preset neutral position;
S22, detecting a current value I of the stepper motor 3;
S23, determining whether the current value I of the stepper motor 3 is greater than or equal to a preset value I0, if yes, determining that the switching valve is rotated to the neutral position where not to execute dispensing, and executing step S3.

In the present application, it is compared a current value I1 of the stepper motor 3 during operation with a preset current value I of the stepper motor 3. When the current value I1 of the stepper motor 3 is greater than or equal to the preset current value I, it is determined that the switching valve is in the preset neutral position, and the switching valve is controlled to perform dispensing by a washing machine.

According to the present invention, a limiting rib 14 is arranged at the preset neutral position of the valve body 1. An end of the valve core 2 is provided with a positioning protrusion 21. The positioning protrusion 21 is configured to be abutted against the limiting rib 14 to limit a rotation range of the valve core 2.

In step S2, the following steps include:
S21, controlling the switching valve to rotate toward the preset neutral position;
S22, detecting a position of the positioning protrusion 21 relative to the limiting rib 14;
S23, determining whether the positioning protrusion 21 is in contact with the limiting rib 14, if yes, determining that the switching valve rotates to a preset neutral position, and controlling the switching valve to stop rotating.

In the present invention, the positioning protrusion 21 is provided on the valve core 2 and the limiting rib 14 is provided at the preset neutral position of the valve body 1. When it is determined that the switching valve needs to return to the neutral state, the stepper motor 3 is configured to drive the valve core 2 to rotate. When the positioning 21 of the valve core 2 abuts against the limiting rib 14 of the valve body 1, it is determined that the switching valve is in the preset neutral position.

Specifically, the positioning protrusion 21 is configured to abut against the limiting rib 14, the rotation of the valve core 2 driven by the stepper motor 3 is blocked, and the current value is increased. Therefore, it is determined the switching valve rotates to the preset neutral position by determining whether the current value I1 exceeds the preset current value I of the stepper motor 3.

When washing laundry next time, it is only necessary to detect whether the switching valve is be in the preset neutral position wherein the valve core 2 is not connected with the liquid inlets 11 of the valve body 1. When the switching valve is already in the preset neutral position, there is no need to control the switching valve to rotate again, and the switching valve is controlled to directly perform dispensing, so that it is reduced in the complexity of dispensing liquid for the next washing.

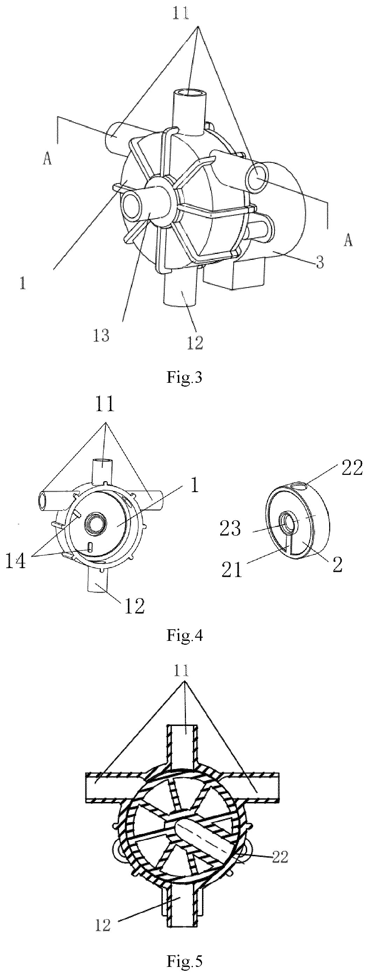

As shown in Fig. 5, the switching valve is in a neutral state when the switching valve rotates to a preset neutral position where the valve core 2 is not in communication with the liquid inlets 11 of the valve body 1.

Further, in step S3, the following steps are included:
S31, obtaining a rotation direction and calculating an amount of rotation steps according to the preset neutral position and a position of a liquid inlet corresponding to a laundry treatment agent;
S32, controlling the stepper motor 3 to rotate according to the rotation direction obtained and the rotation steps calculated;
S33, dispensing the corresponding laundry treatment agent.

In the present application, it is first determined the state of the switching valve. The switching valve performs dispensing only when the state of the switch valve is in the neutral state. When performing dispensing, it is avoided that the laundry treatment agent is dispensed due to the connection of the inlet 22 and the liquid inlet before not returning to the neutral state, so as to prevent the laundry treatment agent from being wasted or overflowing the switching valve. The dispensing accuracy is improved.

Specifically, in the present application, the rotation direction is obtained and an amount of rotation steps is calculated according to the preset neutral position and the position of the liquid inlet corresponding to the laundry treatment agent. The stepper motor 3 is controlled to rotate according to the obtained rotation direction and the calculated rotation steps. After the switching valve is rotated according to the rotation direction and the amount of rotation steps, it is determined that the liquid inlet is connected with the inlet 22 of the valve core 2, and the corresponding detergent is dispensed. Thereby the switching valve is controlled to accurately dispense the laundry treatment agent, and it is increased in user's experience.

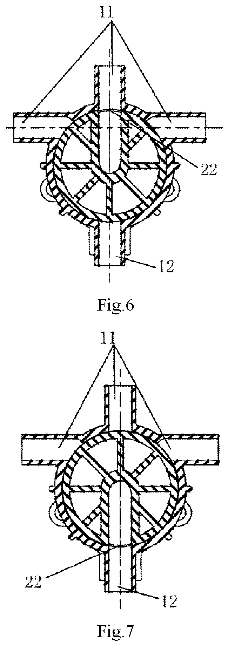

As shown in Fig. 6, a switching valve is in a dispensing state in which the valve core 2 of the switching valve is in communication with the liquid inlet corresponding to a laundry treatment agent, and the laundry treatment agent is dispensed.

Further, between step S3 and step S4, the following steps are also included:
detecting a volume of flow L1 of a laundry treatment agent, and determining whether the volume of flow L1 of the laundry treatment agent is greater than or equal to a preset volume of flow L1; if yes, determining that a process of dispensing the laundry treatment agent is completed, and executing step S4; if not, determining that a process of dispensing the laundry treatment agent is not completed, and executing step S33.

The present application determines whether a process of dispensing the laundry treatment agent is completed according to the amount of flow L1 of the laundry treatment agent through the switch valve. If the amount of flow L1 is not greater than or not equal to the preset volume of flow L, it is determined that a process of dispensing the laundry treatment agent is not completed, and the laundry treatment agent continues to be dispensed. When the amount of flow L1 of the treatment agent is greater than or equal to the preset volume of flow L, it is determined that a process of dispensing the laundry treatment agent is completed. Thereby it is improved in the accuracy of dispensing the laundry treatment agent and increased in the washing effect of laundry.

It can also be determined that a process of dispensing a laundry treatment agent is completed by comparing time t1 of dispensing a laundry treatment agent with a set time t. Within a set time range T, a laundry treatment agent in the switching valve can better flow into a washing barrel. A laundry treatment agent is prevented from remaining in the switching valve and from blocking the switching valve to reduce the washing effect.

In step S4, the following steps are included:
S41, controlling the switching valve to rotate toward a preset neutral position;
S42, detecting a current value I of a stepper motor 3;
S43, determining whether the current value I of the stepper motor is greater than or equal to a preset value I0, if yes, determining that the switching valve rotates to a preset neutral position, and controlling the switching valve to stop rotating.

By controlling the switching valve to return to the neutral state again after a process of dispensing the laundry treatment agent is completed. It is convenient for a washing machine to obtain a rotation direction of the stepper motor 3 and calculate an amount of rotation steps. Thereby it is improved to accurately control the valve core 2 to rotate by the stepper motor 3, and the inlet 22 of the valve core 2 is ensured to be communicated more accurately with the liquid inlets 11 and a water inlet 12 of the valve body 1. The accuracy dispense of the switching valve is improved and user's experience is increased.

Further, in step S5, the following step is included:
obtaining whether a laundry treatment agent is dispensed again within a preset time T; if yes, executing step S3; if not, controlling to flush the switching valve with water.

Further, in step S5, the preset time T is 1s≤T≤5s.

Optionally, the preset time T is 3s.

Specifically, after a laundry treatment agent is dispensed into a washing machine for a first time and when a laundry treatment agent needs to be dispensed again within the preset time T, a dispensing process is same as the above-mentioned dispensing process. According to a preset neutral position and a position of a liquid inlet corresponding to a laundry treatment agent, the rotation direction is obtained and an amount of rotation steps is calculated. The stepper motor 3 is configured to control the inlet 22 of the valve core 2 to be communicated with a liquid inlet corresponding to the laundry treatment agent according to the obtained rotation direction and the calculated rotation steps, and the switching valve is in the dispensing state again.

Further, the liquid inlets 11 of the valve body 1 include one water inlet 12 for flushing the switching valve with water.

In step S5, if it is determined that the switching valve is controlled to be flushed with water, the following steps are included:
S51, obtaining a rotation direction and calculating a amount of rotation steps according to a preset neutral position and a position of the water inlet 12;
S52, controlling the stepper motor 3 to run according to the rotation direction obtained and the rotation steps calculated;
S53, controlling to flush the switching valve with water.

In the present application, the switching valve is switched to a dispensing state from a neutral state, and returns to the neutral state after a dispensing process is completed. When the washing machine controls the switching valve to be flushed, a rotation direction is obtained and an amount of rotation steps is calculated according to the preset neutral position and the position of the water inlet 12 of the valve body 1, and the stepper motor 3 is controlled to run according to the obtained rotation direction and the calculated number of rotation steps. It is determined that the water inlet 12 is connected with the inlet 22 of the valve core 2, and the switching valve is controlled to be flushed with water. Thereby, the laundry treatment agent is prevented from remaining in the switching valve to cause the switching valve to be blocked and reduce the dispensing efficiency and washing effect. It is improved in the dispensing accuracy of the laundry treatment agent, and three states of the switching valve can be continuously controlled.

As shown in Fig. 7, a flushing state of the switching valve refers to a process of controlling the switching valve to be flushed with water.

When the switching valve is controlled to be flushed with water, it is determined that a process of flushing the switching valve is completed and the operation is ended by comparing a flushing time T1 with a set flushing time T2. The switching valve is prevented from flushing for a long-term to waste water resources.

Specifically, a waterway is provided in a washing machine to be connected with the water inlet 12 of the switching valve, and the residual laundry treatment agent in the passage is flushed with tap water. The stepper motor controls an opening of the valve core 2 to be communicated with the water inlet 12 of the valve body for flushing the switching valve. The switching valve is switched from the dispensing state to the flushing state, and a process of flushing the switching valve is completed.

In the present application, if a laundry treatment agent needs to be dispensed for several times in a dispensing process or after flushing with water, the stepper motor 3 is configured to drive the switching valve to return to the neutral state after each dispensing process of the switching valve is completed. It is facilitated that a washing machine controls the stepper motor 3 to rotate and calculate an amount of rotation steps, the controlling method is simple, and a laundry treatment agent is accurately dispensed.

In the neutral state, the dispensing state and the flushing state of the switching valve, pipelines are connected through forward or reverse rotation of the stepper motor 3 in the corresponding direction and the amount of rotation steps.

The present application can also use electrical signals or magnetic switches to control the switching valve.

Specifically, the valve core 2 is provided with a permanent magnet, and the liquid inlets of the valve body 1 are provided with different magnetic induction switches. When the stepper motor 3 is configured to control the valve core 2 to rotate to a corresponding position, the magnetic induction generates an electric signal, so as to obtain the operating state of the switching valve and dispense the laundry treatment agent.

In a controlling method for dispensing liquid for a washing machine according to the present application, when the switching valve is working, an operation of returning an initial position is performed, that is, the initial position is in a neutral state. It is determined to be in the neutral state in which the limiting rib 14 of the valve body 1 is in contact with the positioning protrusion 21 on the valve core 2, and the stepper motor 3 is blocked. At this time, the current of the motor is greater than the preset current value, which means that the switching valve is in the neutral state. Starting from the neutral state, the stepper motor 3 rotates in the corresponding direction or an amount of rotation steps according to the signals of the system to control the valve core 2 to be communicated with the liquid inlets 11 or the water inlet 12 of the valve body 1, to e continuously control three states of the switching valve including the neutral state, the dispensing state and the flushing state. It is improved in accurately controlling the switching valve and accurately dispensing a laundry treatment agent, and the washing effect and user's experience are increased.

The present application also provides a washing machine, which adopts any one of the controlling methods for dispensing liquid into a washing machine described above.

The embodiments merely describe preferred embodiments of the present application, rather than limiting the concept and scope of the present application. The preferred embodiments are disclosed above, and not used for limiting the present application..

## Claims

1. A washing machine control method for dispensing liquid in a washing machine including,
S1, receiving an instruction for dispensing laundry treatment agent;
S2, controlling a switching valve to be in a preset neutral position where a valve core (2) is not communicated with liquid inlets (11) of a valve body (1);
S3, controlling the valve core (2) of the switching valve to rotate to be communicated with one of the liquid inlets (11) corresponding to a laundry treatment agent for dispensing;
S4, controlling the switching valve to rotate to be in the preset neutral position;
S5, determining whether to dispense a laundry treatment agent again; if yes, executing step S3; if not, controlling the switching valve to feed water for flushing.
wherein, the washing machine includes the switching valve; and
the switching valve includes a stepper motor (3), the valve core (2) and the valve body (1);
the valve body (1) is provided with the liquid inlets (11), the valve core (2) is rotatably installed in the valve body (1) and is configured to be selectively communicated with one of the liquid inlets (11), and the stepper motor (3) is connected with the valve core (2) and used to drive the valve core (2) to rotate in the valve body (1);
**characterized in that**,
a limiting rib (14) is arranged at the preset neutral position of the valve body (1), an end of the valve core (2) is provided with a positioning protrusion and the positioning protrusion (21) is configured to be abutted against the limiting (14) to limit a rotation range of the valve core (2), so that an electric current value of the stepper motor (3) is increased;
step S2 includes:
S21, controlling the switching valve to rotate toward the preset neutral position;
S22, detecting an electric current value I of the stepper motor (3);
S23, determining whether the electric current value I of the stepper motor (3) is greater than a preset value I0; if yes, determining that the switching valve is rotated to the preset neutral position, and controlling the switching valve to stop rotating.

2. The washing machine control method for dispensing liquid according to claim 1, wherein, step S3 includes:
S31, obtaining a rotation direction and calculating an amount of rotation steps according to the preset neutral position and a position of one of the liquid inlets (11) corresponding to a laundry treatment agent;
S32, controlling the stepper motor (3) to rotate according to the rotation direction and the rotation steps;
S33, dispensing the laundry treatment agent.

3. The washing machine control method for dispensing liquid according to any one of claims 1 to 2, between step S3 and step S4, including:
detecting a volume of flow L1 of a laundry treatment agent, and determining whether the volume of flow L1 of the laundry treatment agent is greater than or equal to a preset volume of flow L1; if yes, determining that a process of dispensing the laundry treatment agent is completed, and executing step S4.

4. The washing machine control method for dispensing liquid according to any one of claims 1 to 3, wherein, step S5 includes:
obtaining whether the laundry treatment agent is dispensed again within a preset time T; if yes, executing step S3; if not, controlling to flush the switching valve with water.

5. The washing machine control method for dispensing liquid according to claim 4, wherein, in step S5, the preset time T is in a range of 1s≤T≤5s.

6. The washing machine control method for dispensing liquid according to claim 4, wherein, the liquid inlets (11) of the valve body (1) include one water inlet for flushing the switching valve with water;
in step S5, if it is determined that the switching valve is controlled to be flushed with water, the following steps are included:
S51, obtaining a rotation direction and calculating an amount of rotation steps according to the preset neutral position and a position of the water inlet (11);
S52, controlling the stepper motor (3) to run according to the rotation direction and the rotation steps;
S53, controlling to flush the switching valve with water.

7. The washing machine control method for dispensing liquid according to claim 4, wherein, in step S5, the preset time T is 3s.

## Patentansprüche

1. Waschmaschinensteuerungsverfahren zum Dosieren von Flüssigkeit in einer Waschmaschine, umfassend:
S1, Empfangen einer Anweisung zum Dosieren eines Wäschebehandlungsmittels;
S2, Steuern eines Schaltventils, damit es sich in einer voreingestellten Neutralposition befindet, in der ein Ventilkern (2) nicht mit Flüssigkeitseinlässen (11) eines Ventilkörpers (1) in Verbindung steht;
S3, Steuern des Ventilkerns (2) des Schaltventils, damit er sich dreht, um mit einem der Flüssigkeitseinlässe (11) in Verbindung zu stehen, der dem zu dosierenden Wäschebehandlungsmittel entspricht;
S4, Steuern des Schaltventils, damit es sich in die voreingestellte Neutralposition dreht;
S5, Bestimmen, ob erneut ein Wäschebehandlungsmittel abgegeben werden soll; wenn ja, Ausführen von Schritt S3; wenn nein, Steuern des Schaltventils, um Wasser zum Spülen zuzuführen,
wobei
die Waschmaschine das Schaltventil aufweist;
das Schaltventil einen Schrittmotor (3), den Ventilkern (2) und den Ventilkörper (1) aufweist;
der Ventilkörper (1) mit Flüssigkeitseinlässen (11) versehen ist;
der Ventilkern (2) drehbar im Ventilkörper (1) angebracht ist und so konfiguriert ist, dass er wahlweise mit einem der Flüssigkeitseinlässe (11) in Verbindung steht; und
der Schrittmotor (3) mit dem Ventilkern (2) verbunden ist und verwendet wird, den Ventilkern (2) anzutreiben, um im Ventilkörper (1) zu drehen;
**dadurch gekennzeichnet, dass**
eine Begrenzungsrippe (14) an der voreingestellten Neutralposition des Ventilkörpers (1) angeordnet ist, ein Ende des Ventilkerns (2) mit einem Positionierungsvorsprung (21) versehen ist und der Positionierungsvorsprung (21) so konfiguriert ist, dass er an der Begrenzungsrippe (14) anliegt, um einen Drehbereich des Ventilkerns (2) zu begrenzen, sodass ein elektrischer Stromwert des Schrittmotors (3) erhöht wird;
wobei der Schritt S2 umfasst:
S21, Steuern des Schaltventils, um es in Richtung der voreingestellten Neutralposition zu drehen;
S22, Erfassen eines elektrischen Stromwerts I des Schrittmotors (3);
S23, Bestimmen, ob der Stromwert I des Schrittmotors (3) größer als ein voreingestellter Wert I0 ist; wenn ja, Bestimmen, dass das Schaltventil in die voreingestellte Neutralposition gedreht ist, und Steuern des Schaltventils, um die Drehung zu stoppen.

2. Waschmaschinensteuerungsverfahren zum Dosieren von Flüssigkeit gemäß Anspruch 1, wobei der Schritt S3 umfasst:
S31, Erhalten einer Drehrichtung und Berechnen einer Anzahl von Drehschritten gemäß der voreingestellten Neutralposition und einer Position eines der Flüssigkeitseinlässe (11), die einem Wäschebehandlungsmittel entspricht;
S32, Steuern des Schrittmotors (3), um sich gemäß der Drehrichtung und den Drehschritten zu drehen;
S33, Dosieren von dem Wäschebehandlungsmittel.

3. Waschmaschinensteuerungsverfahren zum Dosieren von Flüssigkeit gemäß einem der Ansprüche 1 bis 2, wobei zwischen dem Schritt S3 und dem Schritt S4 Folgendes umfasst:
Erfassen eines Durchflussvolumens L1 eines Wäschebehandlungsmittels und Bestimmen, ob das Durchflussvolumen L1 des Wäschebehandlungsmittels größer oder gleich einem voreingestellten Durchflussvolumen L1 ist; wenn ja, Bestimmen, dass ein Prozess des Dosierens des Wäschebehandlungsmittels abgeschlossen ist, und Ausführen des Schritts S4.

4. Waschmaschinensteuerungsverfahren zum Dosieren von Flüssigkeit gemäß einem der Ansprüche 1 bis 3, wobei der Schritt S5 umfasst:
Erhalten, ob das Wäschebehandlungsmittel innerhalb einer voreingestellten Zeit T erneut dosiert wird; wenn ja, Ausführen des Schritts S3; wenn nein, Steuern des Schaltventils, um dieses mit Wasser zu spülen.

5. Waschmaschinensteuerungsverfahren zum Dosieren von Flüssigkeit gemäß Anspruch 4, wobei in dem Schritt S5 die voreingestellte Zeit T in einem Bereich von 1 s ≤ T ≤ 5 s liegt.

6. Waschmaschinensteuerungsverfahren zum Dosieren von Flüssigkeit gemäß Anspruch 4,
wobei die Flüssigkeitseinlässe (11) des Ventilkörpers (1) einen Wassereinlass zum Spülen des Schaltventils mit Wasser aufweisen; und
im Schritt S5, wenn festgestellt wird, dass das Schaltventil so gesteuert wird, dass es mit Wasser gespült wird, die folgenden Schritte enthalten sind:
S51, Erhalten einer Drehrichtung und Berechnen einer Anzahl von Drehschritten gemäß der voreingestellten Neutralposition und einer Position des Wassereinlasses (11);
S52, Steuern des Schrittmotors (3), damit er entsprechend der Drehrichtung und den Drehschritten läuft; und
S53, Steuern, um das Schaltventil mit Wasser zu spülen.

7. Waschmaschinensteuerungsverfahren zum Dosieren von Flüssigkeit gemäß Anspruch 4, wobei im Schritt S5 die voreingestellte Zeit T 3s beträgt.

## Revendications

1. Procédé de commande de machine à laver pour distribuer un liquide dans une machine à laver, incluant :
S1, la réception d'une instruction pour distribuer un agent de traitement du linge ;
S2, la commande d'une soupape de commutation pour qu'elle soit dans une position neutre prédéfinie dans laquelle un noyau de soupape (2) n'est pas en communication avec les orifices d'entrée de liquide 00 d'un corps de soupape (1) ;
S3, la commande du noyau de la soupape (2) de la soupape de commutation pour qu'il tourne afin qu'il soit en communication avec l'un des orifices d'entrée de liquide (11) correspondant à un agent de traitement du linge pour la distribution ;
S4, la commande de la soupape de commutation pour qu'elle pivote afin qu'elle soit dans la position neutre prédéfinie ;
S5, la détermination pour savoir s'il faut distribuer à nouveau un agent de traitement du linge ; si tel est le cas, l'exécution de l'étape S3 ; si tel n'est pas le cas, la commande de la soupape de commutation pour alimenter en eau le rinçage.
dans lequel la machine à laver inclut la soupape de commutation ; et
la soupape de commutation inclut un moteur pas à pas (3), le noyau de soupape (2) et le corps de soupape (1) ; le corps de soupape (1) est pourvu d'orifices d'entrée de liquide (11), le noyau de soupape (2) est installé en rotation dans le corps de soupape (1) et est configuré pour communiquer de manière sélective avec l'un des orifices d'entrée de liquide (11), et le moteur pas à pas (3) est relié au noyau de soupape (2) et utilisé pour entraîner le noyau de soupape (2) à tourner dans le corps de soupape (1) ; **caractérisée en ce que**,
une nervure de limitation (14) est agencée à la position neutre prédéfinie du corps de soupape (1), une extrémité du noyau de soupape (2) est pourvue d'une protubérance de positionnement (21) et la protubérance de positionnement (21) est configurée pour être appuyée contre la limitation (14) pour limiter une plage de rotation du noyau de soupape (2), de telle sorte qu'une valeur de courant électrique du moteur pas à pas (3) soit augmentée ;
l'étape 52 inclut :
S21, la commande de la soupape de commutation pour tourner vers la position neutre préréglée ;
S22, la détection d'une valeur de courant électrique I du moteur pas à pas (3);
S23, la détermination pour savoir si la valeur de courant électrique I du moteur pas à pas (3) est plus importante qu'ne valeur prédéfinie 10 ; si tel est le cas, la détermination que la soupape de commutation est tournée vers la position neutre prédéfinie et la commande de la soupape de commutation pour arrêter de tourner.

2. Procédé de commande de machine à laver pour distribuer un liquide selon la revendication 1, dans lequel l'étape 53 inclut :
531, l'obtention d'une direction de rotation et le calcul d'un nombre d'étapes de rotation selon la position neutre prédéfinie et une position d'un des orifices d'entrée de liquide (11) correspondant à un agent de traitement du linge ;
532, la commande du moteur pas à pas (3) pour tourner selon le sens de rotation et les étapes de rotation ;
533, la distribution de l'agent de traitement du linge.

3. Procédé de commande de machine à laver pour distribuer un liquide selon l'une quelconque des revendications 1 à 2, entre l'étape 53 et l'étape S4, incluant :
la détection d'un volume de débit L1 d'un agent de traitement du linge et la détermination pour savoir si le volume de débit L1 de l'agent de traitement du linge est supérieur ou égal à un volume de débit L1 prédéfini ; si tel est le cas, la détermination qu'un processus de distribution de l'agent de traitement du linge est terminé et l'exécution de l'étape S4.

4. Procédé de commande de machine à laver pour distribuer un liquide selon l'une quelconque des revendications 1 à 3, dans lequel l'étape 55 inclut :
l'obtention si le produit de traitement du linge est distribué à nouveau pendant un temps T prédéfini ; si tel est le cas, l'exécution de l'étape S3 ; si tel n'est pas le cas, la commande du rinçage de la soupape de commutation à l'eau.

5. Procédé de commande de machine à laver pour distribuer un liquide selon la revendication 4, dans lequel, à l'étape 55, le temps T prédéfini est dans une plage de 1 s ≤ T ≤ 5 s.

6. Procédé de commande de machine à laver pour distribuer un liquide selon la revendication 4, dans lequel les orifices d'entrée de liquide (11) du corps de soupape (1) incluent une orifice d'entrée d'eau pour rincer la soupape de commutation avec de l'eau ;
à l'étape 55, s'il est déterminé que la soupape de commutation est commandée pour être rincée à l'eau, les étapes suivantes sont incluses :
S51, l'obtention d'une direction de rotation et le calcul d'un nombre d'étapes de rotation selon la position neutre prédéfinie et une position de l'orifice d'entrée d'eau (11);
552, la commande du moteur pas à pas (3) pour fonctionner selon le sens de rotation et les étapes de rotation ;
553, la commande pour rincer la soupape de commutation à l'eau.

7. Procédé de commande de machine à laver pour distribuer un liquide selon la revendication 4, dans lequel, à l'étape 55, le temps T prédéfini est 3 s.
